# EUROPEAN PATENT APPLICATION

(11) **EP 2 474 586 A1**
(43) Date of publication of application: **11.07.2012**
(21) Application number: 10813477.6
(22) Date of filing: 27.08.2010
(51) Int. Cl.: C09J 123/26, B32B 15/085, C08F 255/00, C09J 7/02, C09J 123/02, C09J 151/06

(54) **HOT-MELT ADHESIVE MATERIAL FOR INDUCTION HEATING**

(30) Priority: 02.09.2009 JP 2009202349
(71) Applicant: Kaneka Corporation, Osaka-shi, Osaka 530-8288 (JP)
(72) Inventor: MORO, Mitsutoshi, Settsu-shi Osaka 566-0072 (JP)
(74) Representative: Vossius & Partner
(86) International application number: PCT/JP2010/005287
(87) International publication number: WO 2011/027524

(57) **Abstract**

The present invention provides a laminate in which a formed article as an adherend is adhered without impairing the external designability and touch of the formed article, and a hot-melt adhesive material which is suitable for dielectric heating that does not cause thermal damage directly to a formed article. Having reached the idea that a configuration might be useful, in which an adhesive having satisfactory adhesiveness to both metal and resin materials is laminated on a metal layer for selectively heating a hot-melt adhesive layer by dielectric heating, the present inventor has made extensive studies and found that an adhesive material in which a layer of an adhesive including a modified polyolefin resin is laminated on a metal layer, is capable of adhesion without impairing the designability of an adherend by induction heating.

## Description

### TECHNICAL FIELD

The present invention relates to a hot-melt adhesive material for dielectric heating, in which a modified polyolefin resin having satisfactory adhesiveness to both metal and resin materials is laminated on a metal layer for selectively heating a hot-melt adhesive layer by dielectric heating, the adhesive material being capable of adhesion without impairing the designability of an adherend by dielectric heating. Such a material is suitably used in electronics components, automotive interior components, architectural materials, and the like.

### BACKGROUND ART

In recent years, in addition to thinning and weight-reduction tendencies for formed articles due to various electronic devices becoming mobile and carbon dioxide reduction efforts by car manufacturers, the tendency of diversifying design variations is rapidly progressing in such fields as various electronic device housings and automotive interior components, and therefore a process for obtaining, in particular, a formed body with a textured surface, which thus has high levels of external designability and touch, is sought.
Meanwhile, conventionally, solvent-based adhesives are mainstream adhesives used in the production of the electronics components and automotive interior components, which are directly applied onto a formed article and then dried and rapidly subjected to a secondary processing step. In general, solvent-based adhesives are applied onto a formed article with a spray, which has problems such as losses due to scatter, deterioration of the working environment, and coating irregularities. In contrast, hot-melt adhesives are used in various industries from the advantages of being simple adhesives that are applied in a melted state and cooled to complete the adhesion, and satisfying the latest VOC-free requirements.
When a hot-melt adhesive is used in producing a formed body having the external designability mentioned above, with a processing method such as heat-press welding or vibration welding, there are problems of deforming a resinous substrate and impairing the external designability due to the heat during adhesive processing. Meanwhile, dielectric heating can complete the adhesion step in a short time without directly heating the resin formed article, and for instance, adhesion methods such as the following have been proposed: (i) a method in which using high-frequency induction heating equipment, a metal foil that has been surface-treated with a triazinethiol metal salt is superposed on both heterologous crystalline thermoplastic resin materials so that both are joined (Patent Document 1); and (ii) a resin composition for dielectric heating adhesion, comprising a polyolefinic resin containing a conductive material with a volume resistivity of 10⁻² Ω·cm or less (Patent Document 2).
The method of (i) has the problems that, as it requires pressurizing at a pressure of 0.1 MPa or greater, the external designability of the formed article is impaired to an extent that does not meet the requirements due to such an excessive pressure, and that there are detrimental effects on the working environment and the global environment by the use of a solvent for the surface treatment of the metal foil with the triazinethiol metal salt.
The method of (ii) also involves an adhesive processing at a pressure of 0.2 MPa, and thus is not at a level that can meet the requirements of external designability. In addition, with respect to the thinning and weight-reduction tendencies, in practice, if the adhesive layer is thinned to not greater than the particle size of the conductive material, a hole forms in the adhesive layer, decreasing the reliability of the adhesive joint; conversely, if the reliability of the adhesive joint is secured, the thinning and weight-reduction are limited.

Further, a method has been proposed, which only uses a sheet of a polyolefinic formed body having a high-frequency exothermic property for adhesion (Patent Document 3) ; however, it is a melt adhesion method that employs frictional heat for welding, and thus the principle is different from a melt adhesion method that employs dielectric heating.

Patent Document 1: Japanese Patent Application Laid-open No. 2004-244446
Patent Document 2: Japanese Patent Application Laid-open No. 2003-193009
Patent Document 3: Japanese Patent Application Laid-open No. 2009-013231

### SUMMARY OF THE INVENTION

An object of the present invention is to provide a laminate, in which a formed article as an adherend is adhered without impairing the external designability and touch of the resin formed article, and a hot-melt adhesive material which is suitable for dielectric heating that does not cause thermal damage directly to a formed article.

The present inventor, in view to the above situation, has reached the idea that a configuration might be useful, in which an adhesive having satisfactory adhesiveness to both metal and resin materials is laminated on a metal layer for selectively heating a hot-melt adhesive layer by dielectric heating, and the present inventor has made extensive studies and found that an adhesive material in which a layer of an adhesive including a modified polyolefin resin is laminated on a metal layer, is capable of adhesion without impairing the designability of an adherend by induction heating. Thus, he has completed the present invention.

Specifically, the present invention provides the following:
(1) a hot-melt adhesive material for dielectric heating, comprising (A) an adhesive layer containing a modified polyolefin resin composition laminated on at least one surface of (B) a metal material;
(2) a hot-melt adhesive material for dielectric heating, comprising: (A) an adhesive layer containing a modified polyolefin resin composition, (B) a metal material, and (A') an adhesive layer containing a modified polyolefin resin composition, which are laminated in sequence (wherein (A) and (A') may have the same formulation or different formulations) ;
(3) the hot-melt adhesive material for dielectric heating according to (1) or (2), wherein the modified polyolefin resin is obtained by graft-modifying (a-1) a polyolefin resin with a monomer containing an ethylenic double bond and a polar group within the same molecule;
(4) the hot-melt adhesive material for dielectric heating according to any one of (1) to (3), wherein the polar group is a carboxylic acid, an anhydride thereof, or a derivative thereof;
(5) the hot-melt adhesive material for dielectric heating according to any one of (1) to (4), wherein the monomer containing an ethylenic double bond and a polar group within the same molecule is at least one selected from (meth) acrylic acid, maleic anhydride and glycidyl (meth)acrylate;
(6) the hot-melt adhesive material for dielectric heating according to any one of (1) to (5), wherein the modified polyolefin resin is obtained by graft-modifying with an aromatic vinyl monomer or a conjugated diene monomer, in combination with a compound containing an ethylenic double bond and a polar group within the same molecule;
(7) the hot-melt adhesive material for dielectric heating according to any one of (3) to (6), wherein the polyolefin resin (a-1) contains predominantly ethylene units or propylene units;
(8) the hot-melt adhesive material for dielectric heating according to any one of (1) to (7), wherein the modified polyolefin resin composition is in admixture with a polyolefin resin;
(9) the hot-melt adhesive material for dielectric heating according to any one of (1) to (8), wherein the metal material (B) is selected from iron, copper, silver, gold, aluminum, zinc, lead, tin, magnesium, alloys mainly containing iron, alloys mainly containing copper, alloys mainly containing silver, alloys mainly containing gold, alloys mainly containing aluminum, alloys mainly containing zinc, alloys mainly containing lead, alloys mainly containing tin, and alloys mainly containing magnesium;
(10) the hot-melt adhesive material for dielectric heating according to any one of (1) to (9), wherein the adhesive layer containing a modified polyolefin resin composition is sheet- or film-shaped;
(11) the hot-melt adhesive material for dielectric heating according to any one of (1) to (10), wherein the metal material (B) is sheet- or film-shaped;
(12) a hot-melt adhesive sheet or film for dielectric heating, which is obtained by forming the modified polyolefin resin composition into a sheet or film, and stacking the sheet or film on a sheet or film of (B) a metal material, followed by heating for lamination processing;
(13) a laminate comprising an adhesive layer containing a modified polyolefin resin composition which is in contact with at least one surface of (B) a metal material; has a surface that is not in contact with the metal material but is in contact with (C) an adherend; and is adhered by dielectric heating;
(14) a laminate comprising: (A) an adhesive layer containing a modified polyolefin resin composition, a layer of (B) a metal material, and (A') an adhesive layer containing a modified polyolefin resin composition, which are laminated in this order, sandwiched between bonding surfaces of at least two (C) adherends, and adhered by dielectric heating (wherein (A) and (A') may have the same formulation or different formulations);
(15) a laminate comprising the adhesive sheet or film according to (12) which is sandwiched between bonding surfaces of at least two (C) adherends, and adhered by dielectric heating;
(16) the laminate according to any one of (13) to (15), wherein at least one of the adherends (C) is (c-1) an adherend having external designability; and
(17) the laminate according to any one of (13) to (16), wherein the adherend (C) is selected from the group consisting of polyolefin, polystyrene, polyester, styrene-acrylonitrile-conjugated diene copolymer, polyamide, polyimide, unsaturated polyester, polyurethane, urea resin, melamine resin, phenol resin, epoxy resin, (meth) acrylic resin, styrene-acrylonitrile copolymer, styrene-acrylonitrile-conjugated diene copolymer, polyolefin thermoplastic elastomer, polystyrene thermoplastic elastomer, polyester thermoplastic elastomer, polyamide thermoplastic elastomer, polyurethane thermoplastic elastomer, and molded foams thereof.

The hot-melt adhesive material for dielectric heating of the present invention can adhere without impairing the external designability and touch of a formed article and maintain excellent adhesive strength with respect to difficult-to-adhere substrates, and is used suitably in a wide field where high level of external designability is sought, such as automotive parts, electric and electronic parts for home appliances or the like, and various industrial materials.

### BEST MODE FOR CARRYING OUT THE INVENTION

The details of the present invention will be described.

### (Modified polyolefin resin)

As raw materials for the modified polyolefin resin, various materials can be used with no particular limitation. Examples thereof include polymers obtained by homo- or copolymerizing ethylene and/or a-olefin(s) such as propylene, butene-1,4-methylpentene-1 or octene-1, oxidizing the resultant polymer, and introducing a carboxyl group; ethylene-or a-olefin-vinyl monomer copolymers such as ethylene/vinyl chloride copolymer, ethylene/vinylidene chloride copolymer, ethylene/acrylonitrile copolymer, ethylene/methacrylonitrile copolymer, ethylene/vinyl acetate copolymer, ethylene/acrylamide copolymer, ethylene/methacrylamide copolymer, ethylene/acrylic acid copolymer, ethylene/methacrylic acid copolymer, ethylene/maleic acid copolymer, ethylene/methyl acrylate copolymer, ethylene/ethyl acrylate copolymer, ethylene/isopropyl acrylate copolymer, ethylene/butyl acrylate copolymer, ethylene/isobutyl acrylate copolymer, ethylene/2-ethylhexyl acrylate copolymer, ethylene/methyl methacrylate copolymer, ethylene/ethyl methacrylate copolymer, ethylene/isopropyl methacrylate copolymer, ethylene/butyl methacrylate copolymer, ethylene/isobutyl methacrylate copolymer, ethylene/2-ethylhexyl methacrylate copolymer, ethylene/maleic anhydride copolymer, ethylene/ethyl acrylate/maleic anhydride copolymer, ethylene/acrylic acid metal salt copolymer, ethylene/methacrylic acid metal salt copolymer, ethylene/vinyl acetate copolymer or saponification products thereof, ethylene/vinyl propionate copolymer, ethylene/glycidyl methacrylate copolymer, ethylene/ethyl acrylate/glycidyl methacrylate copolymer, and ethylene/vinyl acetate/glycidyl methacrylate copolymer; chlorinated polyolefins such as chlorinated polypropylenes and chlorinated polyethylenes, and the like. These polar group-containing polyolefins may also be used in admixture.
As the modified polyolefin resin, polyolefin resins obtained by graft-modifying (a-1) a polyolefin resin with a monomer containing an ethylenic double bond and a polar group within the same molecule can also be used.
Examples of the polyolefin resin (a-1) include, for instance, polyethylene, polypropylene, poly-1-butene, polyisobutylene, random or block copolymers of propylene with ethylene and/or 1-butene at any ratios, ethylene-propylene-diene terpolymers in which 50% by weight or less of a diene component is combined with any proportions of ethylene and propylene, polymethylpentene, cyclic polyolefin such as copolymers of cyclopentadiene with ethylene and/or propylene, random or block copolymers of ethylene or propylene with 50% by weight or less of a vinyl compound or the like, ethylene- or α-olefin-vinyl monomer copolymers such as ethylene/vinyl chloride copolymer, ethylene/vinylidene chloride copolymer, ethylene/acrylonitrile copolymer, ethylene/methacrylonitrile copolymer, ethylene/vinyl acetate copolymer, ethylene/acrylamide copolymer, ethylene/methacrylamide copolymer, ethylene/acrylic acid copolymer, ethylene/methacrylic acid copolymer, ethylene/maleic acid copolymer, ethylene/methyl acrylate copolymer, ethylene/ethyl acrylate copolymer, ethylene/isopropyl acrylate copolymer, ethylene/butyl acrylate copolymer, ethylene/isobutyl acrylate copolymer, ethylene/2-ethylhexyl acrylate copolymer, ethylene/methyl methacrylate copolymer, ethylene/ethyl methacrylate copolymer, ethylene/isopropyl methacrylate copolymer, ethylene/butyl methacrylate copolymer, ethylene/isobutyl methacrylate copolymer, ethylene/2-ethylhexyl methacrylate copolymer, ethylene/maleic anhydride copolymer, ethylene/ethyl acrylate/maleic anhydride copolymer, ethylene/acrylic acid metal salt copolymer, ethylene/methacrylic acid metal salt copolymer, ethylene/vinyl acetate copolymer or saponification products thereof, ethylene/vinyl propionate copolymer, ethylene/glycidyl methacrylate copolymer, ethylene/ethyl acrylate/glycidyl methacrylate copolymer, and ethylene/vinyl acetate/glycidyl methacrylate copolymer; chlorinated polyolefins such as chlorinated polypropylenes and chlorinated polyethylenes, and the like.
Among these polyolefin resins, polyethylene and polypropylene are preferred because, for example, they have an excellent balance of physical properties, various species are readily available, and they are inexpensive. Polyethylene and polypropylene which contain predominantly ethylene units or propylene units are preferred.
As necessary, another resin or rubber may be added to the polyolefin resin as a raw material within a range that does not impair the effects of the present invention.
Examples of the other resin or rubber include polya-olefins such as polypentene-1 and polymethylpentene-1; α-olefin copolymers such as propylene/butene-1 copolymer with a propylene content of less than 75% by weight; ethylene- or α-olefin-α-olefin-diene monomer copolymers such as ethylene/propylene/5-ethylidene-2-norbornene copolymer with a propylene content of less than 75% by weight; polydiene copolymers such as polybutadiene and polyisoprene; random copolymers of vinyl monomer/diene monomer such as styrene/butadiene random copolymer; block copolymers of vinyl monomer/diene monomer/vinyl monomer such as styrene/butadiene/styrene block copolymer; hydrogenated random copolymers of vinyl monomer/diene monomer such as hydrogenated (styrene/butadiene random copolymer); hydrogenated block copolymers of vinyl monomer/diene monomer/vinyl monomer such as hydrogenated (styrene/butadiene/styrene block copolymer); graft copolymers of vinyl monomer/diene monomer/vinyl monomer such as acrylonitrile/butadiene/styrene graft copolymer and methyl methacrylate/butadiene/styrene graft copolymer; vinyl polymers such as polyvinyl chloride, polyvinylidene chloride, polyacrylonitrile, polyvinyl acetate, polyethyl acrylate, polybutyl acrylate, polymethyl methacrylate and polystyrene; vinyl copolymers such as vinyl chloride/acrylonitrile copolymer, vinyl chloride/vinyl acetate copolymer, acrylonitrile/styrene copolymer and methyl methacrylate/styrene copolymer, and the like.

The amount of the other resin or rubber added to the polyolefin resin depends on the kind of the resin or rubber, and may be any amount within a range that does not impair the effects of the present invention as mentioned above. In general, the amount is preferably about 25% by weight or less.
In addition, such a polyolefin resin (optionally containing various additives) may be either in the form of particles or pellets, and the size and shape thereof are not particularly limited.
In the case of using the additive (another resin or rubber), the additive may have been added to the polyolefin resin in advance or may be added at the time of melting the polyolefin resin. Alternatively the additive may be added, after a modified polyolefin resin has been prepared, to this modified polyolefin resin by an appropriate method. As the monomer containing an ethylenic double bond and a polar group within the same molecule for graft-modifying the polyolefin resin, a variety of monomers may be used with no particular limitation. Preferred examples of the polar group include carboxylic acids, acid anhydrides, or derivatives thereof. Specific examples of such a monomer include unsaturated carboxylic acids such as acrylic acid, methacrylic acid, maleic acid, fumaric acid, tetrahydrophthalic acid, itaconic acid, citraconic acid, crotonic acid, isocrotonic acid, norbornenedicarboxylic acid, and bicyclo[2.2.1]hept-2-ene-5,6-dicarboxylic acid, and acid anhydrides thereof, or derivatives thereof (for instance, acid halides, amides, imides, and esters). Specific examples of such a compound include malenyl chloride, malenyl imide, maleic anhydride, itaconic anhydride, citraconic anhydride, tetrahydrophthalic anhydride, bicyclo[2.2.1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2.2.1]hept-2-ene-5,6-dicarboxylate, hydroxyethyl (meth)acrylate, hydroxypropyl (meth)acrylate, glycidyl (meth)acrylate, monoglycidyl maleate, diglycidyl maleate, monoglycidyl itaconate, diglycidyl itaconate, monoglycidyl allylsuccinate, diglycidyl allylsuccinate, glycidyl p-styrenecarboxylate, allyl glycidyl ether, methallyl glycidyl ether, styrene-p-glycidyl ether, p-glycidylstyrene, 3,4-epoxy-1-butene, 3,4-epoxy-3-methyl-1-butene, vinylcyclohexene monoxide, aminoethyl methacrylate and aminpropyl methacrylate, and the like. Among these, (meth)acrylic acid, maleic anhydride and glycidyl (meth)acrylate are preferred.
The amount of the monomer containing an ethylenic double bond and a polar group within the same molecule used is not particularly limited, and is preferably 0.1 to 20 parts by weight based on 100 parts by weight of the main chain polyolefin. If the amount is less than 0.1 parts by weight, the adhesiveness to the metal material (B) is not sufficient, and if the amount is greater than 20 parts by weight, a large amount of monomers remain, which causes detrimental effects on physical properties.
When a polyolefin is graft-polymerized with an ethylenically unsaturated carboxylic acid or a derivative thereof, another monomer may be used within a range that does not impair the objects of the present invention. Examples of the other monomer include hydroxyl group-containing ethylenically unsaturated compounds, amino group-containing ethylenically unsaturated compounds, epoxy group-containing ethylenically unsaturated compounds, aromatic vinyl compounds, conjugated diene compounds, vinyl ester compounds, vinyl chloride, oxazoline group-containing unsaturated monomers, and the like.
In the case of using an aromatic vinyl compound or a conjugated diene compound, at the time of grafting onto a molecular chain scission-type polyolefin such as polypropylene, scission of the molecular chain is inhibited, allowing an ethylenically unsaturated carboxylic acid or a derivative thereof to be introduced at a high ratio, while keeping a high molecular weight.
The aromatic vinyl compound may be, for example, one species or two or more species of the following: styrene; methylstyrenes such as o-methylstyrene, m-methylstyrene, p-methylstyrene, α-methylstyrene, β-methylstyrene, dimethylstyrene and trimethylstyrene; chlorostyrenes such as o-chlorostyrene, m-chlorostyrene, p-chlorostyrene, α-chlorostyrene, β-chlorostyrene, dichlorostyrene and trichlorostyrene; bromostyrenes such as o-bromostyrene, m-bromostyrene, p-bromostyrene, dibromostyrene and tribromostyrene; fluorostyrenes such as o-fluorostyrene, m-fluorostyrene, p-fluorostyrene, difluorostyrene and trifluorostyrene; nitrostyrenes such as o-nitrostyrene, m-nitrostyrene, p-nitrostyrene, dinitrostyrene and trinitrostyrene; vinylphenols such as o-hydroxystyrene, m-hydroxystyrene, p-hydroxystyrene, dihydroxystyrene and trihydroxystyrene; divinylbenzenes such as o-divinylbenzene, m-divinylbenzene and p-divinylbenzene; diisopropenylbenzenes such as o-diisopropenylbenzene, m-diisopropenylbenzene and p-diisopropenylbenzene; and the like. Among these, styrene, methylstyrenes such as α-methylstyrene and p-methylstyrene, divinylbenzene monomers or divinylbenzene isomer mixtures are preferred because they are inexpensive.
The amount of the aromatic vinyl monomer or conjugated diene monomer added is preferably 0.01 to 10 parts by weight, and more preferably 0.1 to 5 parts by weight per 100 parts by weight of the polyolefin resin. If the added amount is excessively small, the graft rate of the monomer containing an ethylenic double bond and a polar group within the same molecule onto the polyolefin resin tends to be poor. Meanwhile, if the added amount exceeds 10 parts by weight, the graft efficiency of the monomer containing an ethylenic double bond and a polar group within the same molecule reaches a saturation range. A modified polyolefin can be obtained by reacting the polyolefin with the monomer containing an ethylenically unsaturated group and a polar functional group within the same molecule, and optionally an aromatic vinyl monomer or a conjugated diene monomer, in the presence or absence of a radical polymerization initiator through heating.
Examples of the radical polymerization initiator include organic peroxides, azo compounds, and the like. It may be, for example, one species or two or more species of organic peroxides such as ketone peroxides such as methylethyl ketone peroxide and methyl acetoacetate peroxide; peroxy ketals such as 1,1-bis(t-butylperoxy)-3,3,5-trimethylcyclohexane, 1,1-bis(t-butylperoxy)cyclohexane, n-butyl-4,4-bis(t-butylperoxy)valerate and 2,2-bis(t-butylperoxy)butane; hydroperoxides such as p-methane hydroperoxide, 1,1,3,3-tetramethylbutyl hydroperoxide, diisopropylbenzene hydroperoxide and cumene hydroperoxide; dialkyl peroxides such as dicumyl peroxide, 2,5-dimethyl-2,5-di(t-butylperoxy)hexane, α,α'-bis(t-butylperoxy-m-isopropyl)benzene, t-butylcumyl peroxide, di-t-butyl peroxide and 2,5-dimethyl-2,5-di(t-butylperoxy)hexyne-3; diacyl peroxides such as benzoyl peroxide; peroxy dicarbonates such as di(3-methyl-3-methoxybutyl)peroxy dicarbonate and di-2-methoxybutyl peroxy dicarbonate; peroxy esters such as t-butyl peroxyoctate, t-butyl peroxyisobutyrate, t-butyl peroxylaurate, t-butyl peroxy-3,5,5-trimethyl hexanoate, t-butyl peroxyisopropyl carbonate, 2,5-dimethyl-2,5-di(benzoylperoxy)hexane, t-butyl peroxyacetate, t-butyl peroxybenzoate and di-t-butyl peroxyisophthalate, and the like.
Among these, those which have a high hydrogen abstraction ability are particularly preferred, and such a radical polymerization initiator may be, for example, one species or two or more species of the following: peroxy ketals such as 1,1-bis(t-butylperoxy)-3,3,5-trimethylcyclohexane, 1,1-bis(t-butylperoxy)cyclahexane, n-butyl-4,4-bis(t-butylperoxy)valerate and 2,2-bis(t-butylperoxy)butane; dialkyl peroxides such as dicumyl peroxide, 2,5-dimethyl-2,5-di(t-butylperoxy)hexane, α,α'-bis(t-butylperoxy-m-isopropyl)benzene, t-butylcumyl peroxide, di-t-butyl peroxide and 2,5-dimethyl-2,5-di(t-butylperoxy)hexyne-3; diacyl peroxides such as benzoyl peroxide; peroxy esters such as t-butyl peroxyoctate, t-butyl peroxyisobutyrate, t-butyl peroxylaurate, t-butyl peroxy-3,5,5-trimethyl hexanoate, t-butyl peroxyisopropyl carbonate, 2,5-dimethyl-2,5-di(benzoylperoxy)hexane, t-butyl peroxyacetate, t-butyl peroxybenzoate, di-t-butyl peroxyisophthalate, and the like.
The amount of the radical polymerization initiator added is preferably within a range of 0.01 to 10 parts by weight, and more preferably 0.2 to 5 parts by weight per 100 parts by weight of the polyolefin resin. At less than 0.01 parts by weight, the modification will not proceed sufficiently. At more than 10 parts by weight, decreases in fluidity and mechanical properties may be caused.
The graft polymerization reaction used in the present invention is not particularly limited, and solution polymerization, impregnation polymerization, melt polymerization, or the like may be employed. In particular, melt polymerization is simple and preferred.

Regarding the addition order and method in melt kneading, the suitable addition order is such that, to a mixture obtained by melt-kneading the polyolefin resin, the radical polymerization initiator and the monomer containing an ethylenic double bond and a polar group within the same molecule, an aromatic vinyl monomer is added and they are melt-kneaded. Adding in this order allows the monomer containing an ethylenic double bond and a polar group within the same molecule to be grafted efficiently onto the polyolefin, and also suppresses the thinner sheet or film in mechanical properties during modification. Here, the order and method of mixing or melt-kneading other ingredients added as necessary are not particularly limited.

From the viewpoint that the polyolefin resin melts sufficiently and does not decompose thermally, the heating temperature in melt kneading is preferably 100 to 250°C. In addition, the time period for melt kneading (time period starting when the radical polymerization initiator has been mixed) is usually 30 seconds to 60 minutes.

As an apparatus used for the melt kneading, an extruder, Banbury mixer, mill, kneader, heat roller, or the like may be used. From the aspect of productivity, methods using a single screw or twin screw extruder are preferred. In addition, the melt kneading may be repeated multiple times in order to mix the ingredients sufficiently homogeneously.

In the modified polyolefin resin composition, the following agents may be added as necessary within a range that does not impair the effects of the present invention: stabilizers such as antioxidants, metal inactivators, phosphorus processing stabilizers, ultraviolet light absorbers, ultraviolet light stabilizers, fluorescent whitening agents, metal soaps and antacid adsorbents, and additives such as cross-linking agents, chain transfer agents, nucleating agents, lubricants, plasticizers, fillers, reinforcing materials, pigments, dyes, fire-retardants and antistatic agents. In the case of using these stabilizers and additives, they may be added to the polyolefin resin in advance, or may be added at the time of graft-modifying the polyolefin resin, or may be added, after a modified polyolefin resin has been prepared, to this modified polyolefin resin by an appropriate method.

The modified polyolefin resin composition may also be used in admixture with a polyolefin resin.

Examples of the polyolefin resin that is to be mixed in the modified polyolefin resin composition include polypropylene homopolymer, high-density polyethylene, low-density polyethylene, linear low-density polyethylene, poly-1-butene, polyisobutylene, random or block copolymers of propylene with ethylene and/or 1-butene at any ratios, ethylene-propylene-diene terpolymers in which 50% by weight or less of a diene component is combined with any proportions of ethylene and propylene, polymethylpentene, cyclic polyolefins such as copolymers of cyclopentadiene with ethylene and/or propylene, random copolymers of ethylene or propylene with 50% by weight or less of a vinyl compound such as, for example, vinyl acetate, an alkyl methacrylate ester, an alkyl acrylate ester or an aromatic vinyl, polyolefin thermoplastic elastomer block copolymers, olefinic thermoplastic elastomers (simple mixtures of polypropylene with ethylene/propylene copolymer or ethylene-propylene-diene terpolymer, and partially cross-linked products thereof or fully cross-linked products thereof), and the like. These may be used alone or two or more species may be used in admixture.
From the viewpoint of higher rigidity and lower cost, polypropylene homopolymer is preferred, and from the viewpoint of both higher brigidity and higher impact resistance, block copolymers of propylene and another monomer are preferred. In addition, when flexibility is needed, polyolefin thermoplastic elastomer is preferred.
From the viewpoint of bonding to an adherend with a large surface area while maintaining the external designability, a modified polyolefin resin composition having at least two types of melting points is preferred. The preparation method is not particularly limited, and for example, a polyolefin resin that itself has two types of melting points may be modified and used, or two species of polyolefin resins with different melting points may be mixed, simultaneously modified and used, or two species of modified polyolefin resin compositions with different melting points may be mixed and used. When a metal material as an exothermic body is heated by dielectric heating for heat welding, a composition with a low melting point is preferred as it melts, absorbs heat and reduces overheating. Here, the melting point of the low melting point composition is preferably 40°C or higher but lower than 160°C, and more preferably 80°C or higher but lower than 145°C. The melting point can be determined by DSC measurements.

In the case of mixing the modified polyolefin resin composition and the polyolefin resin, the mixing ratio is not particularly limited. An amount of 100 parts by weight of the modified polyolefin resin composition is preferably mixed with 0.1 to 100 parts by weight of the polyolefin resin in terms of adhesiveness, and is more preferably mixed with 0.1 to 70 parts by weight, still more preferably 0.3 to 50 parts by weight, and further preferably 0.5 to 20 parts by weight of the polyolefin resin.

As for the amount of impurities in the modified polyolefin resin composition, fewer is preferred. The "impurities" as used herein mean low molecular weight components not grafted on the polyolefin resin and unreacted monomers. The impurities may cause a fish eye in the process of film formation, and the fewer the amount of impurities, the thinner the sheet or film can be formed. A thinner sheet or film is preferred since it can reduce stress relaxation and can suppress a reduction in adhesion performance.

### (Regarding sheet- or film-shaped formed body)

The modified polyolefin resin composition can be formed into a sheet- or film-shaped formed body having heat weldability. In addition, a polyolefin resin composition obtained by adding the modified polyolefin resin composition to the polyolefin resin can also be formed into a sheet- or film-shaped formed body having heat weldability. The "heat weldability" as used herein means the ability to melt by heat and bond to an adherend. The sheet- or film-shaped formed body in the present invention may be a formed body having a thickness of, for example, 3 µm to 3 mm, and preferably 10 µm to 1 mm, and can be used as a sheet or film.

The method for producing a sheet- or film-shaped formed body of polyolefin having heat weldability is not particularly limited, and for example, the modified polyolefin resin composition and optionally the polyolefin resin may be dry-blended or melt-kneaded and then formed into a sheet-shaped formed body using a machine of any kind, such as extrusion molding machines, injection molding machines, calendar molding machines, inflation molding machines, roll forming machines, and hot press molding machines.

### (Regarding metal material)

As the metal material used in the present invention, any metal materials that are either magnetic or nonmagnetic may be used, and examples thereof include iron, copper, silver, gold, aluminum, zinc, lead, tin, magnesium, alloys mainly containing iron, alloys mainly containing copper, alloys mainly containing silver, alloys mainly containing gold, alloys mainly containing aluminum, alloys mainly containing zinc, alloys mainly containing lead, alloys mainly containing tin, alloys mainly containing magnesium, and the like. Iron, copper, aluminum, zinc, alloys mainly containing iron, alloys mainly containing copper, alloys mainly containing aluminum, and alloys mainly containing zinc are preferred because they can be formed into thin films and are inexpensive.

These metal materials act as exothermic bodies by dielectric heating.

The thickness of such a metal material may be, for example, 1 µm to 3 mm, preferably 3 µm to 1 mm, and more preferably 5 µm to 0.5 mm. From the viewpoints of being able to follow an adherend flexibly and of practical productivity, for instance, a thickness of 50 µm to 0.5 mm is preferred for a ferritic steel plate made from an alloy mainly containing iron which is magnetic, and a thickness of 5 µm to 0.2 mm is preferred for aluminum which is nonmagnetic.

The ratio between the thickness of the metal material and the thickness of the modified polyolefin resin composition [(thickness of modified polyolefin resin composition (mm) / (thickness of metal material (mm))] may be, for example, 0.05 to 50, and preferably 0.1 to 25.

The hot-melt adhesive material for dielectric heating of the present invention is intended to provide a component that bonds without impairing its external designability and touch, and it can join not only a component with a small bonding area but also with a large bonding area. The ratio between the thickness of the metal material and the adhesion area (adhesion area (mm²) /thickness (mm)) per coil used for induction heating may be, for example, less than 10,000,000, and preferably less than 7,000,000.

For an even larger component, the component can be joined by enlarging the heating area using a plurality of coils, or can be joined by moving one coil sequentially to the bonding sites.

### (Method for producing hot-melt adhesive material for dielectric heating)

The method for producing the hot-melt adhesive material for dielectric heating of the present invention is not particularly limited, and for example, a sheet- or film-shaped formed body of the modified polyolefin resin composition and a sheet or film of the metal material may be stacked and processed into a sheet laminate using a machine of any kind, such as hot laminator machines, roll forming machines, and hot press molding machines.

In addition, the modified polyolefin may be dissolved in a solvent, applied onto a sheet or film of the metal material and dried to form a hot-melt adhesive material for dielectric heating.

### (Regarding adherend)

Examples of materials for the adherend used in the present invention include synthetic polymer materials such as polyolefin resin, polystyrene resin, polyester resin, polyamide resin, polyimide resin, unsaturated polyester resin, polyurethane resin, urea resin, melamine resin, phenol resin, epoxy resin, acrylic-urethane resin, (meth)acrylic resin, styrene-acrylonitrile copolymer, styrene-acrylonitrile-conjugated diene copolymer, polycarbonate resin, silicon resin, polyolefin thermoplastic elastomer, polystyrene thermoplastic elastomer, polyester thermoplastic elastomer, polyamide thermoplastic elastomer, and polyurethane thermoplastic elastomer. Molded foams based on these polymer materials may also be used as adherends. Other examples of the adherend include inorganic materials such as glass and ceramics; cellulosic polymer materials such as paper and cloth, and the like.

As for adherend materials, two or more species of different materials may be mixed or combined. In addition, when a laminate is formed of two different adherends adhered via the adhesive film of the present invention, the materials of the two adherends may be either the same as or different from each other. The form of the adherend is not particularly limited, and examples thereof include film, sheet, plate, fiber, and the like. In addition, the adherend may optionally be subjected to surface treatment such as covering with a mold release agent or plating, coating with a coating material, surface modification by plasma, laser or the like, surface oxidation, etching, and the like. Specific examples of the adherend include, but not particularly limited to, decorative films used in automotive components such as trims (e.g. door trim, interior trim), formed ceilings and sheet materials (e.g. interior sheet, instrument panel skin, decorative sheet), and housing materials such as interior doors, partitions, interior wall boards, furniture and system kitchens.

The adherend having external designability means that which is obtained by giving a design such as uneven shapes, patterns, and colors to the external appearance of an adherend to impart .a touch or an attractive appearance, and examples thereof include, but not particularly limited to, decorative films used in automotive components such as trims (e.g. door trim, interior trim), formed ceilings and sheet materials (e.g. interior sheet, instrument panel skin, decorative sheet), and housing materials such as interior doors, partitions, interior wall boards, furniture and system kitchens.

### (Regarding adhesion method using hot-melt adhesive material for dielectric heating)

As the method for adhesion of an adherend using the hot-melt adhesive material for dielectric heating of the present invention, the following steps may be mentioned.
A stacked adherend/modified polyolefin resin composition/metal material/modified polyolefin resin composition/adherend is placed on an dielectric heating apparatus. Regarding the layered part consisting of the modified polyolefin resin composition/metal material/modified polyolefin resin composition, a composite material that has been integrated by heat lamination in advance may be used. Next, the hot-melt adhesive material for dielectric heating of the present invention is subjected to a dielectric voltage from the dielectric heating apparatus for dielectric heat generation, and then melts over time as the temperature of the adhesive rises, and adheres to the adherends. When adhesion has been made, the dielectric voltage is turned off, followed by standing to cool so as to cool the composite consisting of the adherend/adhesive material (modified polyolefin resin composition/metal material/modified polyolefin resin composition)/adherend. The dielectric heating apparatus is adjusted to give an oscillation frequency for heat generation according to the metal material used.
Alternatively a stacked adherend/modified polyolefin resin composition/metal material may be placed on an dielectric heating apparatus for adhesion by dielectric heating, and then a modified polyolefin resin composition/adherend may be superposed on a surface of the metal material of the laminate, and subjected to dielectric heating for adhesion.
Alternatively combining with an adhesion method other than dielectric heating is also possible, for example, subjecting a layered adherend/modified polyolefin resin composition/metal material to conventional thermocompression bonding for adhesion, then superposing a modified polyolefin resin composition/adherend on a surface of the metal material of the laminate, and carrying out adhesion by dielectric heating.
In addition, the modified polyolefin resin compositions sandwiching the metal material may have the same formulation or different formulations.
The coil used for induction heating is not particularly limited, and for example, using a coil designed to match the shape of a component that is to be bonded is preferred because heating can be performed uniformly with no locally excessive heating, and also because not only planar components but also curved, three-dimensional components can be bonded.
The setting temperature applied by dielectric heating is preferably in the range of 80 to 300°C, and more preferably in the range of 100 to 250°C. Here, the temperature of the metal material serving as an exothermic body can be determined by measurements using a thermocouple. The temperature can be adjusted by the distance between the metal material serving as an exothermic body and the coil, and the thickness of the metal material. The reason is that, if the temperature is less than 80°C, adhesive strength tends not to be obtained due to insufficient melting, and if the temperature exceeds 300°C, the adhesive tends to generate heat excessively and decompose thermally.
In addition, the application time period in dielectric heating is preferably in the range of 1 to 600 seconds, and more preferably in the range of 10 to 300 seconds. The reason is that if the time period exceeds 600 seconds, the adhesive tends to generate heat excessively and decompose thermally.

### EXAMPLES

Concrete examples will be shown in the following; however, the present invention is not to be limited to the examples described below. In the Examples and Comparative Examples described below, "part (s) " and "%" represent "part (s) by weight" and "% by weight," respectively.

### (Method for preparing test pieces)

One example is shown. A polyolefin sheet having hot-melt adhesiveness, an aluminum foil and a polyolefin sheet having hot-melt adhesiveness were stacked in this order and subjected to heat lamination with an iron at 240°C for one minute. This laminate (hot-melt adhesive material for dielectric heating) was sandwiched between the adhesion surface (reverse of the patterned surface) of a polypropylene flat plate with a pattern of elevations and depressions (120 mm × 120 mm) and the adhesion surface of a polypropylene flat plate (120 mm × 120 mm), and placed on the top plate of a commercial IH cooker (manufactured by Zojirushi Corporation; product No. EZ-EB15), and a wooden weight (2.5 kg) was placed on this laminate for immobilization (0.002 MPa). After heating by applying a dielectric voltage set to 160°C over 30 seconds, the laminate was cooled and left in an atmosphere at 23°C to obtain a test piece.

### (Adhesiveness evaluation)

The adhesiveness evaluation was carried out by manually peeling at 23°C with needle nose pliers and observing the fracture state.

The fracture state was evaluated as: cohesive failure if fracture occurred in the modified polyolefin resin composition layer of the test piece; adherend fracture if fracture occurred in the adherend portion of the test piece; and interface delamination if fracture occurred in an interface between the laminated layers of the test piece.

### (Calculation of residual rate of pattern of elevations and depressions)

Using a glossmeter VG-2000 (manufactured by Nippon Denshoku Industries Co., Ltd.), the 60° reflectance of the polypropylene flat plate with a pattern of elevations and depressions was measured before and after the adhesive processing. The value before the adhesive processing being regarded as 100%, and the value 100 being regarded as 0%, the residual rate of the pattern of elevations and depressions was calculated from the value after the adhesive processing. For instance, if the reflectance after the adhesive processing is 60 relative to the reflectance before the adhesive processing of 1, the calculation is: (100 - 60)/(100 - 1) × 100 = 40%.

### (Preparation Example 1)

After feeding 100 parts of (a-1) a polypropylene ethylene rubber (V3401, manufactured by Dow Chemical; MFR = 8) and 0.5 parts of 1,3-di(t-butylperoxyisopropyl)benzene (PERBUTYL P, manufactured by NOF Corporation; 1-minute half-life temperature: 175°C) through a hopper mouth to a twin screw extruder (manufactured by The Japan Steel Works, LTD.; product name: LABOTEX30; φ30 mm; L/D=28), which was set at a cylinder temperature of 200°C and a screw rotation speed of 250 rpm, and melt-kneading, 5 parts of (a-2) styrene and 5 parts of (a-3) glycidyl methacrylate were then added in the middle of the cylinder and melt-kneaded to obtain a modified polyolefin resin pellet (A-1). The obtained resin pellet (A-1) was introduced into a hopper of a single screw extruder (manufactured by Toyo Seiki Seisaku-sho, Ltd. ; product name: LABO PLASTOMILL; φ20 mm; L/D = 20), which was set at cylinder and die temperatures of 200°C and a screw rotation speed of 100 rpm, and a polyolefin sheet (A-1T) of approximately 13 cm in width and 100 µm in thickness having hot-melt adhesiveness was obtained through a T-die provided at the die tip.

### (Preparation Example 2)

After feeding 100 parts of (a-1) a block polypropylene (M142E, manufactured by Prime Polymer Co., Ltd.; MFR = 10) and 0.5 parts of 1,3-di(t-butylperoxyisopropyl)benzene (PERBUTYL P, manufactured by NOF Corporation; 1-minute half-life temperature: 175°C) through a hopper mouth to a twin screw extruder (manufactured by The Japan Steel Works, LTD.; product name: LABOTEX 30; φ30 mm; L/D = 28), which was set at a cylinder temperature of 200°C and a screw rotation speed of 250 rpm, and melt-kneading, 5 parts of (a-2) styrene and 5 parts of (a-3) glycidyl methacrylate were then added in the middle of the cylinder and melt-kneaded to obtain a modified polyolefin resin pellet (A-2). The obtained resin pellet (A-2) was introduced into a hopper of a single screw extruder (manufactured by Toyo Seiki Seisaku-sho, Ltd. ; product name: LABO PLASTOMILL; φ20 mm; L/D = 20), which was set at cylinder and die temperatures of 200°C and a screw rotation speed of 100 rpm, and a polyolefin sheet (A-2T) of approximately 13 cm in width and 100 µm in thickness having hot-melt adhesiveness was obtained through a T-die provided at the die tip.

### (Preparation Example 3)

After feeding 100 parts of (a-1) a homopolypropylene (S119, manufactured by Prime Polymer Co., Ltd.; MFR = 60) and 0.5 parts of 1,3-di(t-butylperoxyisopropyl)benzene (PERBUTYL P, manufactured by NOF Corporation; 1-minute half-life temperature: 175°C) through a hopper mouth to a twin screw extruder (manufactured by The Japan Steel Works, LTD.; product name: LABOTEX 30; φ30 mm; L/D = 28), which was set at a cylinder temperature of 200°C and a screw rotation speed of 250 rpm, and melt-kneading, 5 parts of (a-2) styrene and (a-3) 2 parts of glycidyl methacrylate were then added in the middle of the cylinder and melt-kneaded to obtain a modified polyolefin resin pellet (A-3). The obtained resin pellet (A-3) was introduced into a hopper of a single screw extruder (manufactured by Toyo Seiki Seisaku-sho, Ltd. ; product name: LABO PLASTOMILL; φ20 mm; L/D = 20), which was set at cylinder and die temperatures of 200°C and a screw rotation speed of 100 rpm, and a polyolefin sheet (A-3T) of approximately 13 cm in width and 100 µm in thickness having hot-melt adhesiveness was obtained through a T-die provided at the die tip.

### (Preparation Example 4)

After feeding 70 parts of (a-1) a homopolypropylene (S119, manufactured by Prime Polymer Co., Ltd.; MFR = 60), 30 parts of a polypropylene ethylene rubber (V3401, manufactured by Dow Chemical; MFR = 8) and 0.5 parts of 1,3-di(t-butylperoxyisopropyl)benzene (PERBUTYL P, manufactured by NOF Corporation; 1-minute half-life temperature: 175°C) through a hopper mouth to a twin screw extruder (manufactured by The Japan Steel Works, LTD.; product name: LABOTEX 30; φ30 mm; L/D = 28), which was set at a cylinder temperature of 200°C and a screw rotation speed of 250 rpm, and melt-kneading, 5 parts of (a-2) styrene and 5 parts of (a-3) glycidyl methacrylate were then added in the middle of the cylinder and melt-kneaded to obtain a modified polyolefin resin pellet (A-4). The obtained resin pellet (A-4) was introduced into a hopper of a single screw extruder (manufactured by Toyo Seiki Seisaku-sho, Ltd. ; product name: LABO PLASTOMILL; φ20 mm; L/D = 20), which was set at cylinder and die temperatures of 200°C and a screw rotation speed of 100 rpm, and a polyolefin sheet (A-4T) of approximately 13 cm in width and 100 µm in thickness having hot-melt adhesiveness was obtained through a T-die provided at the die tip.

### (Preparation Example 5)

After feeding 92 parts of the resin pellet obtained in Preparation Example 3 and 8 parts of the resin pellet obtained in Preparation Example 1 through a hopper mouth to a twin screw extruder (manufactured by The Japan Steel Works, LTD. ; product name: LABOTEX 30; φ30 mm; L/D = 28), which was set at a cylinder temperature of 200°C and a screw rotation speed of 150 rpm, and melt-kneading, a resin composition was obtained and introduced into a hopper of a single screw extruder (manufactured by Toyo Seiki Seisaku-sho, Ltd. ; product name: LABO PLASTOMILL; φ20 mm; L/D = 20), which was set at cylinder and die temperatures of 200°C and a screw rotation speed of 100 rpm, and a polyolefin sheet (A-5T) of approximately 13 cm in width and 100 µm in thickness having hot-melt adhesiveness was obtained through a T-die provided at the die tip.

### (Preparation Example 6)

After feeding 70 parts of the resin pellet obtained in Preparation Example 3 and 30 parts of the resin pellet obtained in Preparation Example 1 through a hopper mouth to a twin screw extruder (manufactured by The Japan Steel Works, LTD.; product name: LABOTEX 30; φ30 mm; L/D = 28), which was set at a cylinder temperature of 200°C and a screw rotation speed of 150 rpm, and melt-kneading, a resin composition was obtained and introduced into a hopper of a single screw extruder (manufactured by Toyo Seiki Seisaku-sho, Ltd.; product name: LABO PLASTOMILL; φ20 mm; L/D = 20), which was set at cylinder and die temperatures of 200°C and a screw rotation speed of 100 rpm, and a polyolefin sheet (A-6T) of approximately 13 cm in width and 100 µm in thickness having hot-melt adhesiveness and a polyolefin sheet (A-6'T) of approximately 13 cm in width and 50 µm in thickness having hot-melt adhesiveness were each obtained through a T-die provided at the die tip.

### (Preparation Example 7)

After feeding 50 parts of the resin pellet obtained in Preparation Example 3 and 50 parts of the resin pellet obtained in Preparation Example 1 through a hopper mouth to a twin screw extruder (manufactured by The Japan Steel Works, LTD.; product name: LABOTEX 30; φ30 mm; L/D = 28), which was set at a cylinder temperature of 200°C and a screw rotation speed of 150 rpm, and melt-kneading, a resin composition was obtained and introduced into a hopper of a single screw extruder (manufactured by Toyo Seiki Seisaku-sho, Ltd. ; product name: LABO PLASTOMILL; φ20 mm; L/D = 20), which was set at cylinder and die temperatures of 200°C and a screw rotation speed of 100 rpm, and a polyolefin sheet (A-7T) of approximately 13 cm in width and 100 µm in thickness having hot-melt adhesiveness was obtained through a T-die provided at the die tip.

### (Preparation Example 8)

After feeding 30 parts of the resin pellet (A-3) obtained in Preparation Example 3 and 70 parts of a polypropylene ethylene rubber (V3401, manufactured by Dow Chemical; MFR = 8) through a hopper mouth to a twin screw extruder (manufactured by The Japan Steel Works, LTD.; product name: LABOTEX 30; φ30 mm; L/D = 28), which was set at a cylinder temperature of 200°C and a screw rotation speed of 150 rpm, and melt-kneading, a resin composition was obtained and introduced into a hopper of a single screw extruder (manufactured by Toyo Seiki Seisaku-sho, Ltd.; product name: LABO PLASTOMILL; φ20 mm; L/D = 20), which was set at cylinder and die temperatures of 200°C and a screw rotation speed of 100 rpm, and a polyolefin sheet (A-8T) of approximately 13 cm in width and 100 µm in thickness having hot-melt adhesiveness was obtained through a T-die provided at the die tip.

### (Preparation Example 9)

After feeding 100 parts of (a-1) a polypropylene ethylene rubber (V3401, manufactured by Dow Chemical; MFR = 8), 0.5 parts of 1,3-di(t-butylperoxyisopropyl)benzene (PERBUTYL P, manufactured by NOF Corporation; 1-minute half-life temperature: 175°C) and 1 part of (a-4) maleic anhydride (manufactured by Wako Pure Chemical Industries, Ltd.) through a hopper mouth to a twin screw extruder (manufactured by The Japan Steel Works, LTD.; product name: LABOTEX 30; φ30 mm; L/D = 28), which was set at a cylinder temperature of 200°C and a screw rotation speed of 250 rpm, and melt-kneading, 1 part of (a-2) styrene was then added in the middle of the cylinder and melt-kneaded to obtain a modified polyolefin resin pellet (A-9) . The obtained resin pellet (A-9) was introduced into a hopper of a single screw extruder (manufactured by Toyo Seiki Seisaku-sho, Ltd.; product name: LABO PLASTOMILL; φ20 mm, L/D = 20), which was set at cylinder and die temperatures of 200°C and a screw rotation speed of 100 rpm, and a polyolefin sheet (A-9T) of approximately 13 cm in width and 100 µm in thickness having hot-melt adhesiveness was obtained through a T-die provided at the die tip.

### (Preparation Example 10)

The polyolefin sheet (A-1T) having hot-melt adhesiveness obtained in Preparation Example 1, an aluminum foil (manufactured by Mitsubishi Aluminum Co., Ltd.; 12 µm-thick) and the (A-1T) were stacked in this order, fed to a hot laminator machine (Fuji Lamipacker; product No. LPD3212) set at a temperature of 150°C and a linear speed of 0.8 m/minute, and subjected to heat lamination, whereby a hot-melt adhesive material for dielectric heating (A-1L) was obtained.

### (Preparation Example 11)

The polyolefin sheet (A-6'T) having hot-melt adhesiveness obtained in Preparation Example 6, an aluminum foil (manufactured by Mitsubishi Aluminum Co., Ltd.; 12 µm-thick) and the (A-6' T) were stacked in this order, fed to a hot laminator machine (Fuji Lamipacker; product No. LPD3212) set at a temperature of 150°C and a linear speed of 0.8 m/minute, and subjected to heat lamination, whereby a hot-melt adhesive material for dielectric heating (A-2L) was obtained.

### (Reference Example 1)

(a-1) A polypropylene ethylene rubber (V3401, manufactured by Dow Chemical; MFR = 8) was introduced into a hopper of a single screw extruder (manufactured by Toyo Seiki Seisaku-sho, Ltd.; product name: LABO PLASTOMILL; φ20 mm; L/D = 20), which was set at cylinder and die temperatures of 200°C and a screw rotation speed of 100 rpm, and a polyolefin sheet (A-10T) of approximately 13 cm in width and 100 µm in thickness having hot-melt adhesiveness was obtained through a T-die provided at the die tip.

### (Examples 1 to 15 and Comparative Examples 1 to 3)

The polyolefin sheets having hot-melt adhesiveness obtained in Preparation Examples 1 to 11 and Reference Example 1 were used to prepare test pieces in which an adherend with a pattern of elevations and depressions was adhered, in order to carry out evaluation for adhesiveness and calculation of the residual rate of the pattern of elevations and depressions.
For Example 14, in the preparation of test pieces, the hot-melt adhesive material for dielectric heating (A-1L) prepared in Preparation Example 10 was used instead of laminating in sequence the polyolefin sheet having hot-melt adhesiveness, an aluminum foil and the polyolefin sheet having hot-melt adhesiveness. For Example 15, the hot-melt adhesive material for dielectric heating (A-2L) prepared in Preparation Example 11 was sandwiched between 300 × 120 mm adherends and bonded using a 300 × 120 mm coil instead.

**[Table 1]**

| | | Lamination combination | | | | | Processing method | Residual rate (%) of pattern of elevations and depressions | Adhesiveness evaluation |
|---|---|---|---|---|---|---|---|---|---|
| | | Adherend | Polyolefin sheet having hot-melt adhesiveness | Metal material | Polyolefin sheet having hot-melt adhesiveness | Adhered | | | Fracture state |
| Examples | 1 | Patterned polypropylene | A-1T | Aluminum foil (12 µm) | A-1T | Polypropylene | IH (160°C × 30 sec.) | 98 | Adherend fracture |
| | 2 | Patterned polypropylene | A-1T | Aluminum foil (30 µm) | A-1T | PoNpropylene | IH (160°C × 30 sec.) | 98 | Adherend fracture |
| | 3 | Patterned polypropylene | A-1T | Galvanized steel (150 µm) | A-1T | ABS | IH (160°C × 30 sec.) | 96 | Cohesive failure |
| | 4 | Patterned polypropylene | A-1T | Aluminum foil (12 µm) | A-1T | ABS | IH (160°C × 30 sec.) | 98 | Cohesive failure |
| | 5 | Patterned polypropylene | A-1 | Aluminum foil (12 µm) | A-2T | ABS | IH (160°C× 30 sec.) | 98 | Cohesive failure |
| | 6 | Patterned polypropylene | A-2T | Aluminum foil (12 µm) | A-2T | Polypropylene | IH (160°C × 30 sec.) | 98 | Cohesive failure |
| | 7 | Patterned polypropylene | A-3T | Aluminum foil (12 µm) | A-3T | Polypropylene | IH (160°C × 30 sec.) | 98 | Adherend fracture |
| | 8 | Patterned polypropylene | A-4T | Aluminum foil (12 µm) | A-4T | Polypropylene | IH (160°C × 30 sec.) | 100 | Adherend fracture |
| | 9 | Patterned polypropylene | A-5T | Aluminum foil (12 µm) | A-5T | Polypropylene | IH (160°C × 30 sec.) | 100 | Adherend fracture |
| | 10 | Patterned polypropylene | A-6T | Aluminum foil (12 µm) | A-6T | Polypropylene | IH (160°C × 30 sec.) | 100 | Adherend fracture |
| | 11 | Patterned polypropylene | A-7T | Aluminum foil (12 µm) | A-7T | Polypropylene | IH (160°C × 30 sec.) | 100 | Adherend fracture |
| | 12 | Patterned polypropylene | A-8T | Aluminum foil (12 µm) | A-8T | Polypropylene | IH (160°C × 30 sec.) | 98 | Adherend fracture |
| | 13 | Patterned polypropylene | A-9T | Aluminum foil (12 µm) | A-9T | Polypropylene | IH (1 BO°C × 30 sec.) | 98 | Adherend fracture |
| | 14 | Patterned polypropylene | A-1L | Not used | Not used | Polypropylene | IH (160°C × 30 sec.) | 99 | Adherend fracture |
| | 15 | Patterned polypropylene | A-2L | Not used | Not used | Polypropylene | IH (160°C × 30 sec.) | 100 | Adherend fracture |
| Comparative Examples | 1 | Patterned polypropylene | A-10T | Aluminum foil (12 µm) | A-10T | Polypropylene - | IH (160°C × 30 sec.) | 98 | Interface delamination (aluminum) |
| | 2 | Patterned polypropylene | A-1T | Not used | Not used | Polypropylene | IH (160°C × 30 sec.) | 100 | Interface delamination (all layers) |
| | 3 | Patterned polypropylene | A-1T | Aluminum foil (12 µm) | A-1T | Polypropylene | Hot press (160°C × 30 sec.) | 61 | Adherend fracture |

In Examples 1 to 15, adhesive processing by dielectric heating was carried out using the adhesive material of the present invention in which modified polyolefin resin compositions and a metal material were laminated. All these examples demonstrated very satisfactory adhesion performance without impairing the external designability. In contrast, the adhesiveness was insufficient in Comparative Examples 1 and 2, and the external designability was considerably impaired in Comparative Example 3 which employed hot press for the processing.

**[Table 2]**

| | | Melting point (°C) of modified polyolefin resin composition | Thickness (mm) of metal material | Thickness (mm) of modified polyolefin resin composition (polyolefin sheet having hot-melt adhesiveness) | Adhesion area (mm²) | Ratio between thickness of metal material and adhesion area | Ratio between thickness of metal material and thickness of modified polyolefin resin composition |
|---|---|---|---|---|---|---|---|
| Examples | 1 | 97 | 0.012 | 0.10 | 14,400 | 1,200,000 | 8.3 |
| | 2 | 97 | 0.030 | 0.10 | 14,400 | 480,000 | 3.3 |
| | 3 | 97 | 0.150 | 0.10 | 14,400 | 96,000 | 0.7 |
| | 4 | 97 | 0.012 | 0.10 | 14,400 | 1,200,000 | 8.3 |
| | 5 | A-1T: 97, A-2T: 160 | 0.012 | 0.10 | 14,400 | 1,200,000 | 8.3 |
| | 6 | 160 | 0.012 | 0.10 | 14,400 | 1,200,000 | 8.3 |
| | 7 | 160 | 0.012 | 0.10 | 14,400 | 1,200,000 | 8.3 |
| | 8 | 160, 97 | 0.012 | 0.10 | 14,400 | 1,200,000 | 8.3 |
| | 9 | 160,97 | 0.012 | 0.10 | 14,400 | 1,200,000 | 8.3 |
| | 10 | 160,97 | 0.012 | 0.10 | 14,400 | 1,200,000 | 8.3 |
| | 11 | 160, 97 | 0.012 | 0.10 | 14,400 | 1,200,000 | 8.3 |
| | 12 | 160 | 0.012 | 0.10 | 14,400 | 1,200,000 | 8.3 |
| | 13 | 97 | 0.012 | 0.10 | 14,400 | 1,200,000 | 8.3 |
| | 14 | 97 | 0.012 | 0.10 | 14,400 | 1,200,000 | 8.3 |
| | 15 | 160, 97 | 0.012 | 0.05 | 36,000 | 3,000,000 | 4.2 |

The following results in Examples 1 to 15 are shown: the melting point of the modified polyolefin resin composition, the ratio between the thickness of the metal material and the adhesion area, and the ratio between the thickness of the metal material and the thickness of the modified polyolefin resin composition.

### INDUSTRIAL APPLICABILITY

The present invention provides a laminate in which a formed article as an adherend is adhered without impairing the external designability and touch of the formed article, and a hot-melt adhesive material which is suitable for dielectric heating that does not cause thermal damage directly to a formed article.

## Claims

1. A hot-melt adhesive material for dielectric heating, comprising (A) an adhesive layer containing a modified polyolefin resin composition laminated on at least one surface of (B) a metal material.

2. A hot-melt adhesive material for dielectric heating, comprising: (A) an adhesive layer containing a modified polyolefin resin composition, (B) a metal material, and (A') an adhesive layer containing a modified polyolefin resin composition, which are laminated in sequence (wherein (A) and (A') may have the same formulation or different formulations) .

3. The hot-melt adhesive material for dielectric heating according to claim 1 or 2, wherein the modified polyolefin resin is obtained by graft-modifying (a-1) a polyolefin resin with a monomer containing an ethylenic double bond and a polar group within the same molecule.

4. The hot-melt adhesive material for dielectric heating according to any one of claims 1 to 3, wherein the polar group is a carboxylic acid, an anhydride thereof, or a derivative thereof.

5. The hot-melt adhesive material for dielectric heating according to any one of claims 1 to 4, wherein the monomer containing an ethylenic double bond and a polar group within the same molecule is at least one selected from (meth) acrylic acid, maleic anhydride and glycidyl (meth)acrylate.

6. The hot-melt adhesive material for dielectric heating according to any one of claims 1 to 5, wherein the modified polyolefin resin is obtained by graft-modifying with an aromatic vinyl monomer or a conjugated diene monomer, in combination with a compound containing an ethylenic double bond and a polar group within the same molecule.

7. The hot-melt adhesive material for dielectric heating according to any one of claims 3 to 6, wherein the polyolefin resin (a-1) predominantly contains ethylene units or propylene units.

8. The hot-melt adhesive material for dielectric heating according to any one of claims 1 to 7, wherein the modified polyolefin resin composition is in admixture with a polyolefin resin.

9. The hot-melt adhesive material for dielectric heating according to any one of claims 1 to 8, wherein the metal material (B) is selected from iron, copper, silver, gold, aluminum, zinc, lead, tin, magnesium, alloys mainly containing iron, alloys mainly containing copper, alloys mainly containing silver, alloys mainly containing gold, alloys mainly containing aluminum, alloys mainly containing zinc, alloys mainly containing lead, alloys mainly containing tin, and alloys mainly containing magnesium.

10. The hot-melt adhesive material for dielectric heating according to any one of claims 1 to 9, wherein the adhesive layer containing a modified polyolefin resin composition is sheet- or film-shaped.

11. The hot-melt adhesive material for dielectric heating according to any one of claims 1 to 10, wherein the metal material (B) is sheet- or film-shaped.

12. A hot-melt adhesive sheet or film for dielectric heating, which is obtained by forming the modified polyolefin resin composition into a sheet or film, and stacking the sheet or film on a sheet or film of (B) a metal material, followed by heating for lamination processing.

13. A laminate comprising an adhesive layer containing a modified polyolefin resin composition which is in contact with at least one surface of (B) a metal material; has a surface that is not in contact with the metal material but is in contact with (C) an adherend; and is adhered by dielectric heating.

14. A laminate comprising: (A) an adhesive layer containing a modified polyolefin resin composition, a layer of (B) a metal material, and (A') an adhesive layer containing a modified polyolefin resin composition, which are laminated in this order, sandwiched between bonding surfaces of at least two (C) adherends, and adhered by dielectric heating (wherein (A) and (A') may have the same formulation or different formulations) .

15. A laminate comprising the adhesive sheet or film according to claim 12 which is sandwiched between bonding surfaces of at least two (C) adherends, and adhered by dielectric heating.

16. The laminate according to any one of claims 13 to 15, wherein at least one of the adherends (C) is (c-1) an adherend having external designability.

17. The laminate according to any one of claims 13 to 16, wherein the adherend (C) is selected from the group consisting of polyolefin, polystyrene, polyester, styrene-acrylonitrile-conjugated.diene copolymer, polyamide, polyimide, unsaturated polyester, polyurethane, urea resin, melamine resin, phenol resin, epoxy resin, (meth) acrylic resin, styrene-acrylonitrile copolymer, styrene-acrylonitrile-conjugated diene copolymer, polyolefin thermoplastic elastomer, polystyrene thermoplastic elastomer, polyester thermoplastic elastomer, polyamide thermoplastic elastomer, polyurethane thermoplastic elastomer, and molded foams thereof.
